# EUROPEAN PATENT APPLICATION

(11) **EP 2 031 333 A2**
(43) Date of publication of application: **04.03.2009**
(21) Application number: 08162883.6
(22) Date of filing: 25.08.2008
(51) Int. Cl.: F28D 20/00

(54) **Improved accumulation reservoir for fluids**

(30) Priority: 29.08.2007 IT VI20070242
(71) Applicant: Cecchin, Pietro, 31010 Fonte (TV) (IT)
(72) Inventor: Cecchin, Pietro, 31010 Fonte (TV) (IT)
(74) Representative: Bonini, Ercole

(57) **Abstract**

The invention concerns an accumulation reservoir (20; 50; 60) for fluids (F), comprising a container (2) in which it is possible to identify: a partition (3) arranged in an intermediate position in the container (2) in order to define an upper chamber (4) and a lower chamber (5) communicating with each other; an inlet passage (6) communicating with the upper chamber (4); an outlet passage (7) communicating with the lower chamber (5); delivery passages (8) arranged at different heights in the container (2); return passages (9) arranged at different heights along the container (2); a first heat exchanger (21) with a coil (22) arranged inside the container (2) in contact with the fluid (F), provided with an inlet passage (21a) and an outlet passage (21 b) arranged on the cover of the container (2) for the circulation of a first auxiliary fluid (Fa) that receives heat from the fluid (F) contained in the container (2). The coil (22) is wound to form a first helix (23) and a second helix (24) arranged inside the first helix (23).

## Description

The present invention concerns a fluid accumulation reservoir, particularly suitable for use in heating systems.

As is known, to heat buildings heating systems are used in which a heat carrier fluid circulates, which is heated by a heating unit and conveyed towards a plurality of users like, for example, radiators, fan convectors, floor coils, and the like.

In many heating systems there is also an accumulation reservoir for the heat carrier fluid, interposed between the users and the heating unit, capable of storing a given quantity of hot fluid in such a way as to reduce the frequency of starts of the heating unit, thus increasing the overall efficiency of the system.

Inside the reservoir, the fluid tends to stratify at decreasing temperatures from top to bottom and therefore it can be drawn at different heights, at the temperature that is most suitable for each specific user.

Consequently, stratification ensures better use of the heat accumulated in the reservoir, to the benefit of the overall energy efficiency of the system, which results to be improved.

Furthermore, the fact that the fluid is conveyed to the users at a temperature that is almost constant makes it possible to obtain optimal thermodynamic conditions and maximum comfort for the user.

The reservoir also allows the frequency of the starts of the heating unit to be limited, since the latter has only the function to keep the temperature of the fluid in the reservoir constant, with variations that are relatively slow due to the accumulation effect in the reservoir itself.

A further increase in the overall energy efficiency of the heating system is obtained by connecting the accumulation reservoir to one or more auxiliary heat sources like, for example, solar panels, chimneys with heat exchanger, electrical resistances and the like.

Also in this case, each heat source can be connected to the reservoir in the most suitable position, which will be higher as the temperature of the fluid supplied by the heat source increases, thus improving efficiency even more.

The above is known according to Italian Patent no. 0001336165, in the name of the present applicant, in which an accumulation reservoir is described which among other things comprises a partition placed in an intermediate position.

The partition partially separates the upper part of the reservoir from its lower part, limiting the mixing of the fluid contained therein, in such a way as to accentuate the thermal stratification phenomenon.

According to one of the construction variants described in the above mentioned patent, a heat exchanger is positioned inside the reservoir and substantially develops for the entire height of the reservoir itself, with an auxiliary fluid, which is generally sanitary water, flowing therein.

The heat exchanger comprises a coil in the shape of a cylindrical helix and is constituted, in a first variant, by four rigid metal pipes arranged side by side and, in another variant, a single flexible pipe supported by a frame, generally made from steel parts.

The auxiliary fluid that flows in the heat exchanger receives heat from the fluid contained in the reservoir, heating almost immediately and with no need to start the heating unit, thus further increasing the overall efficiency of the heating system.

Efficient as it is, however, the accumulation reservoir just described still poses some drawbacks.

A first drawback lies in that since the heat exchanger develops for the entire height of the reservoir, it interferes with the partition which, as it must be arranged inside the cylindrical helix defined by the coil, cannot exceed the cross section of the latter.

In this way the partition has a reduced size, which considerably affects the stratification of the fluid inside the accumulation reservoir, thus limiting the efficiency of the heat exchange.

This limitation is particularly evident in the systems that recover thermal energy from low temperature heat sources like, for example, solar panels, heat pumps and equivalent devices.

In fact, in this case, the hot fluid contained in the reservoir has a relatively low temperature that, together with the reduced efficiency of the heat exchange, prevents the heating of the auxiliary fluid that flows in the heat exchanger at the temperatures usually required for sanitary water.

Furthermore, while flowing into the heat exchanger, the auxiliary fluid crosses areas where the temperature varies considerably and, therefore, the average temperature at which the heat exchange takes place is relatively low, to the detriment of the efficiency of the exchange.

In addition to that, in the case where the heat exchanger is made with one flexible pipe, the reservoir described above has a reduced exchange surface, which limits its efficiency compared to the heat exchanger with several rigid pipes.

A further drawback posed by both variants of the known reservoir described above is represented by its difficult maintenance, in particular when the heat exchanger must be extracted from the reservoir, since it can interfere with the partition, running the risk of causing damages.

In the attempt to solve some of the drawbacks indicated above, a further embodiment of the reservoir has been developed, which comprises a heat exchanger that occupies only the upper part of the reservoir.

In the arrangement described above, the heat exchanger does not interfere with the partition, which therefore can be larger, in such a way as to accentuate the separation between the two chambers in order to favour the stratification of the fluid.

Furthermore, the heat exchanger is affected by the higher temperature present in the upper chamber, thus ensuring more effective heating of the auxiliary fluid.

Consequently, this type of reservoir makes it possible to heat the auxiliary fluid at a higher temperature compared to the reservoir described above and is, therefore, particularly suited to produce hot sanitary water.

Advantageously, furthermore, the high temperature that is obtained in this way for the heat exchanger improves the hygienic conditions of the dispensed hot water and prevents the proliferation of pathogenic microorganisms like, for example, legionella.

Notwithstanding the above mentioned advantages, the construction form just described, however, poses the drawback that the heat exchanger has a reduced heat exchange surface, due to its confinement in the upper chamber. Consequently, not even the above mentioned reservoir is suitable for being used in the systems where the hot fluid is supplied by low temperature sources like solar panels, heat pumps and other analogous devices.

The present invention aims to overcome all the drawbacks listed above.

In particular, it is the object of the invention to construct an accumulation reservoir which makes it possible to heat an auxiliary fluid more effectively than the reservoirs of known type, with the same heat sources supplying the hot fluid.

The object mentioned above is achieved by an improved fluid accumulation reservoir carried out according to the main claim.

The dependent claims all contain further details and variants of the reservoir of the invention.

Advantageously, the higher heating efficiency of the auxiliary fluid makes it possible to use the reservoir of the invention for the production of sanitary water, even in combination with low temperature heat sources like, for example, solar panels, heat pumps and equivalent devices.

Therefore, advantageously, the reservoir that is the subject of the invention makes it possible to save energy as it effectively uses heat sources that are not fully exploited by the accumulation reservoirs of known type.

The above-mentioned objects and advantages will be highlighted in greater detail in the following description of a preferred embodiment of the invention and of some variants of the same, which is provided as an example without limitation, with reference to the attached drawings, wherein:
- Figure 1 shows a diagram of a heating system comprising the accumulation reservoir that is the subject of the invention;
- Figure 2 shows a cross section view of the accumulation reservoir that is the subject of the invention;
- Figure 3 shows an axonometric view of a detail of the reservoir shown in Figure 2;
- Figures 4 and 5 show two sectioned views of two different variants of the reservoir shown in Figure 3.

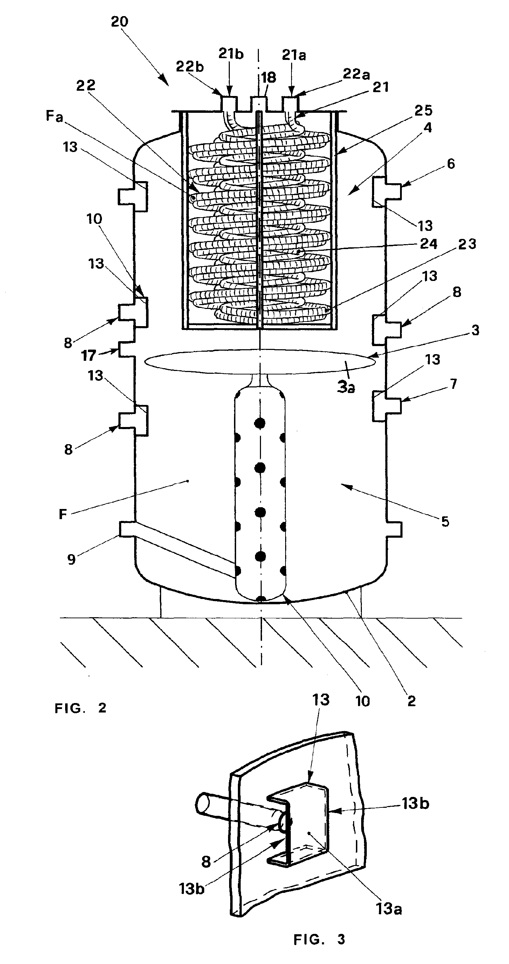

The accumulation reservoir that is the subject of the invention, which in the sectioned view of Figure 2 is indicated as a whole by **20,** comprises a container **2.**

Said container **2** may obviously have any shape and size and its inside is provided with a partition **3** arranged in an intermediate position, which is preferably a diaphragm **3a.**

The partition **3** defines in the container **2** an upper chamber **4** and a lower chamber **5,** communicating with each other at the level of the external perimeter of the partition **3,** whose cross section is smaller than the inner cross section of the container **2.**

Obviously, in construction variants of the invention, the partition **3** may occupy the whole cross section of the container **2** and comprise one or more through holes ensuring communication between the two chambers **4, 5.**

The container **2** is also provided with an inlet passage **6** communicating with the upper chamber **4** and an outlet way **7** communicating with the lower chamber **5,** as well as a plurality of delivery passages **8** and return passages **9,** arranged at different heights on the container **2.**

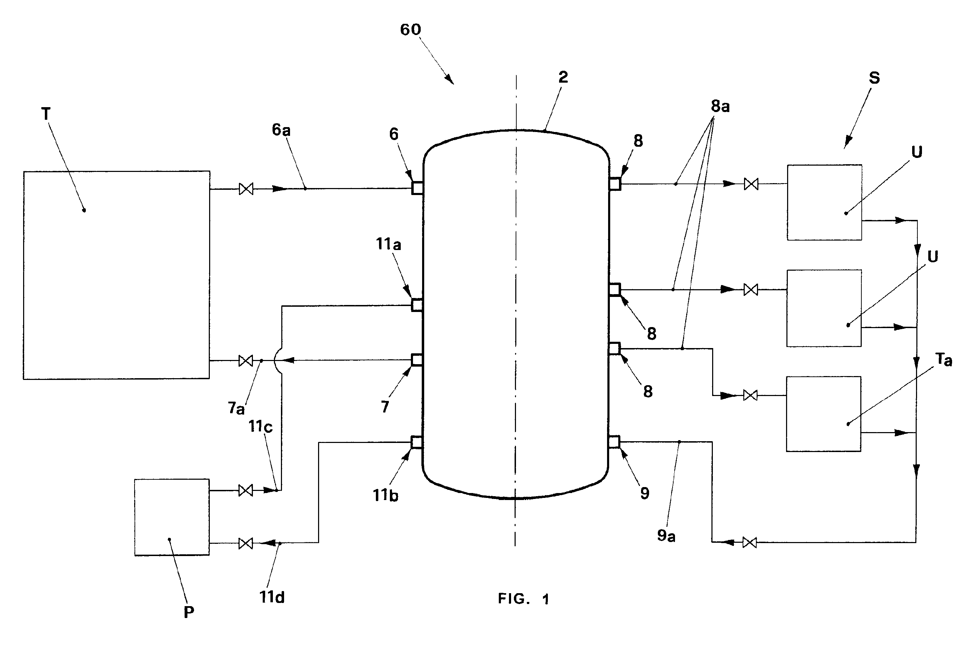

As shown in Figure 1, which illustrates by way of example the generic diagram of a heating system, the inlet and outlet passages **6, 7** are respectively connected to a delivery passage 6a and to a return passage **7a** of a heating unit **T** that heats the fluid **F** contained in the container **2.**

Each delivery passage **8,** instead, conveys the fluid to a corresponding inlet passage **8a** of external heat exchange means **S,** whose outlet passages **9a** are connected to the return passages **9** of the container **2.**

It is obvious that the above mentioned delivery passage **8** and return passage **9** may be provided in any number, that is, may be one or more than one, depending on the complexity of the system.

Analogously, there may be more than one inlet passage **6** and more than one outlet passage **7,** communicating with one or more heating units **T.**

Finally, if it is necessary to generate a more diversified stratification, several overlapping partitions **3** may be provided, in order to define more than two chambers **4, 5** inside the container **2.**

Inside the container **2** there is also a first heat exchanger **21** placed in contact with the fluid **F.**

The first heat exchanger **21** is provided with an inlet passage **22a** and an outlet passage **22b** for the circulation of a first auxiliary fluid **Fa** which receives heat from the fluid **F** contained in the container **2.**

The above mentioned first auxiliary fluid **Fa** can be, for example, sanitary water.

In particular, the first heat exchanger **21** is a coil **22,** provided with inlet passages **22a** and outlet passages **22b** for the first auxiliary fluid **Fa,** arranged on the cover of the container **2.**

According to the invention, the coil **22** is wound to form a first helix **23** and a second helix **24,** preferably but not necessarily cylindrical, the second helix **24** being arranged inside the first helix **23.**

The first auxiliary fluid **Fa** flows in succession through the two helices **23, 24** in opposite directions, that is, flows down one helix and up the other one.

The presence of a double helix makes it possible to lengthen the distance covered by the auxiliary fluid **Fa** along the heat exchanger **21,** thus increasing the efficiency of the first heat exchanger **21** compared to the heat exchangers of known type, and thus achieving the object of the invention.

In fact, due to this longer route, the auxiliary fluid **Fa** exchanges heat with the hot fluid F for a longer time and therefore absorbs from it a greater quantity of heat.

This makes the reservoir **20** that is the subject of the invention particularly suitable for use in the production of hot sanitary water when low temperature heat sources are available, like, for example, solar panels or heat pumps.

Furthermore, advantageously, for a preset outlet temperature of the auxiliary fluid **Fa,** the reservoir **20** of the invention makes it possible to supply a higher flow rate compared to the reservoirs of known type.

Still advantageously, the double helix defined by the first heat exchanger **21** has a larger heat exchange surface compared to the heat exchangers of the reservoirs of known type having the same size, thus further increasing the heating efficiency.

The first heat exchanger **21** is preferably contained in the upper chamber **4** of the container **2.**

Advantageously, the fact that the heat exchange takes place in the upper chamber **4,** where the temperature of the fluid **F** is higher, further favours the efficiency of the first heat exchanger **21.**

Furthermore, the first heat exchanger **21,** being arranged in the upper chamber **4,** does not interfere with the partition **3** that, therefore, can have any size in order to advantageously favour the stratification of the fluid **F.**

Still advantageously, the absence of interference between the partition **3** and the first heat exchanger **21** makes it possible to remove the latter comfortably during maintenance operations.

It is also evident that in construction variants of the invention, not represented herein, the heat exchanger **21** can be arranged differently than described above, for example extend also into the lower chamber **5,** and if necessary develop for the entire height of the container **2.**

The coil **22** is preferably constituted by a pair of flexible metal pipes arranged side by side.

Advantageously, the flexible pipe is easier to clean, in particular as regards the removal of scale.

Furthermore, the presence of two metal pipes makes it possible to increase the heat exchange surface, thus increasing the efficiency of the first heat exchanger **21.**

It is evident, however, that in different embodiments of the invention the coil **22** may comprise a single flexible metal pipe, or even more than two metal pipes.

The flexible pipes are preferably supported by a frame **25** arranged inside the container **2,** preferably made of steel parts and comprising a central core contained in an external cage, joined together by cross elements suited to delimit a space that houses the flexible pipes.

According to a construction variant not represented herein, the coil is constituted by four rigid metal pipes arranged side by side and not by flexible pipes.

It is evident, however, that in different embodiments of the invention the coil may comprise more than four metal pipes.

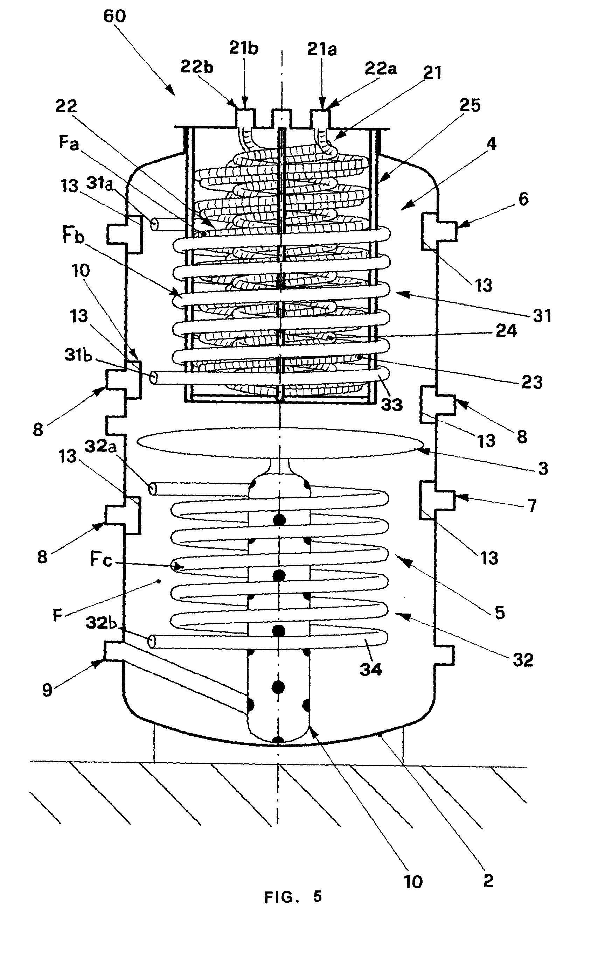

Figure 5 illustrates a construction variant of the reservoir that is the subject of the invention, indicated as a whole by **60** and comprising also two second heat exchangers **31, 32,** respectively arranged in each chamber **4, 5** of the container **2** in contact with the fluid F.

Each one of the second heat exchangers **31, 32** defines an inlet passage **31a, 32a** and an outlet passage **31 b, 32b** for the circulation of a second auxiliary fluid **Fb, Fc.**

Advantageously, the second heat exchangers **31, 32** can be connected to auxiliary heat sources like, for example, sets of solar panels, indicated by **P** in Figure 1, or any other heat source, to heat the fluid **F.**

Advantageously, said second heat exchangers **31, 32** make it possible to recover the heat coming from auxiliary heat sources, accumulating it in the fluid **F** present in the reservoir **60** and further reducing the frequency of the starts of the main heating unit **T.**

In particular, the lower second heat exchanger **32** is preferably connected to a set of solar panels **P** or to a heat pump, not illustrated herein, that usually supply heat at low temperature, while the upper second heat exchanger **31** is connected to a heat source at higher temperature, like for example a chimney with heat exchanger.

It is evident, however, that in construction variants of the invention the two second heat exchangers **31, 32** may be connected to any type of heat source, or even be both connected, in series or in parallel, to the same heat source.

Obviously, the choice of the connection to be made is up to the designer or installer, depending on the available heat sources and on the requirements of the system.

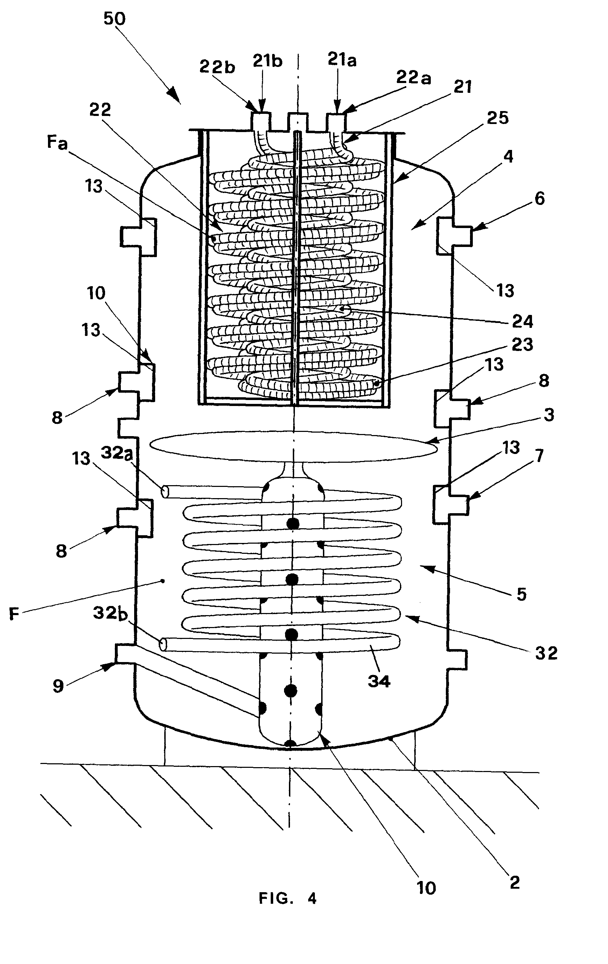

It is also clear that, in further construction variants of the invention, an example of which is shown in Figure 4, the reservoir **50** may be provided with a single second heat exchanger **32,** preferably arranged in the lower chamber **5** of the container **2.**

Preferably but not necessarily, each second heat exchanger **31, 32** is made up of one rigid metal pipe wound to form a coil **33, 34.**

In particular, as shown in Figure 5, the upper second heat exchanger **31** is arranged outside the first heat exchanger **21** present therein.

Preferably but not necessarily, all the above mentioned variants of reservoir **20, 50, 60** comprise also anti-turbulence means **10,** arranged inside the container **2** and immersed in the fluid **F** in order to prevent it from being excessively mixed inside the container **2** itself and thus to advantageously maintain its stratification.

As shown in particular in Figure 2, the anti-turbulence means **10** preferably comprise a manifold chamber **13** arranged at the level of each delivery passage **8** and of the inlet and outlet passages **6** and **7,** which reduces the turbulence generated by the fluid **F** while it flows through them.

Preferably and as shown in Figure 3, each manifold chamber **13** is constituted by a box-shaped container **13a** applied to the inner wall of the container **2** and provided with openings **13b** communicating with the inside of the container **2** itself.

Preferably, the above mentioned openings are adjacent to the inner wall of the container **2** and arranged according to substantially vertical planes.

Advantageously, the openings **13b** oriented as described above determine a withdrawal of fluid **F** according to a substantially horizontal direction, in such a way as to favour the maintenance of the stratification of the fluid **F** inside the container **2.**

Preferably, and as shown in Figure 2, the anti-turbulence means **10** also comprise a manifold body **14,** connected to the inlet passage **9** of the container **2** through a connection pipe **15.**

The manifold body **14** is provided with through holes for the passage of the fluid **F,** preferably arranged uniformly on the manifold body **14** and aligned according to vertical directions parallel to one another.

Advantageously, the above mentioned manifold body **14** improves the distribution of the inlet flow in the container **2,** thus making it easier to maintain a good stratification in the lower chamber **5,** accentuating therein the difference in temperature between the upper and the lower area.

Advantageously, the above mentioned difference in temperature improves the efficiency of the heat exchange and the promptness of intervention of the heat sources connected to the lower chamber **5,** above all when these operate in a limited temperature range, as it happens for example with solar panels.

As regards the partition **3,** it is supported by the manifold body **14,** to which it is mechanically connected.

It is evident that, in construction variants of the invention, the partition **3** may be welded to the inner walls of the container **2,** or be supported by a frame or analogous supporting means suited to mechanically connect the partition **3** to the container **2.**

Preferably, the reservoir that is the subject of the invention is also provided with a flange **17,** applied to the outside of the container **2,** which supports a submersible electric heater, not illustrated herein.

Finally, preferably but not necessarily, the invention comprises breather means **18** arranged on the upper part of the container **2** to ensure the discharge of the gases accumulated inside it during operation.

In practice, the reservoir that is the subject of the invention is used in a heating system, an example of which is schematically illustrated in Figure 1, showing that it comprises the reservoir previously indicated by **60.**

Obviously, different solutions of the system may comprise a different accumulation reservoir, according to any of the embodiments **20, 50, 60** or variants thereof.

In any case, the fluid **F** contained in the container **2** is maintained at a temperature that is almost constant by means of the heating unit **T** connected to it.

Preferably, the start and stop of the heating unit **T** are controlled by one or more probes, not illustrated herein, arranged at different heights in the container **2** to measure the temperature of the fluid **F.**

The fluid **F** is taken from the container **2** at different heights and conveyed to external heat exchange means **S,** some of which belonging to users **U** like, for example, radiators, fan convectors, floor coils and the like, to which the fluid **F** transfers heat.

Preferably, the fluid **F** conveyed to the users **U** is withdrawn from the upper area of the container **2,** where it is available at a higher temperature, and flows back into its lower area.

One or more of the above mentioned heat exchange means **S** may also belong to an auxiliary heat source **Ta** like, for example, a chimney with heat exchanger or any other heat generator of known type, thus allowing the fluid **F** to be heated in order to advantageously achieve a considerable energy recovery.

The fluid **F** is also heated by means of the second auxiliary fluid **Fc** that flows in the second heat exchanger **32** contained in the container **2,** connected with a closed circuit to a set of solar panels **P.**

Obviously, in the case where the accumulation reservoir is not provided with said second heat exchanger **32,** the set of solar panels **P** can be directly connected to the lower chamber of the container **2.**

The first auxiliary fluid **Fa** flows in the first heat exchanger **21,** independently of the fluid **F,** passing through the hottest area of the reservoir **60** and getting warmer in such a way as to be able to be used, for example, as hot sanitary water.

In particular, the auxiliary fluid **Fa** flows in succession through the two concentrical cylindrical helices **23, 24** of the first heat exchanger **21,** benefiting from a particularly effective heat exchange that makes it possible to exploit in the best possible way the temperature of the fluid **F** present in the upper chamber **4** of the reservoir **60.**

The above clearly shows that the invention achieves the set object.

In fact, the double helix configuration of the first heat exchanger makes it possible to create a longer path for the auxiliary fluid and a larger heat exchange surface than in the equivalent reservoirs of known type.

In the cases where the technical characteristics illustrated in the claims are followed by references, these have been added only with the aim to facilitate the comprehension of the claims themselves and therefore said references do not have any limiting effect on the degree of protection to be granted to each element they identify only by way of example.

## Claims

1. Accumulation reservoir (20; 50; 60) for fluids (F), of the type comprising a container (2) in which it is possible to identify:
- at least one partition (3) arranged in an intermediate position in said container (2) to define an upper chamber (4) and a lower chamber (5) communicating with each other, wherein the average temperature of the fluid (F) contained in said upper chamber (4) is higher than the temperature of the fluid contained in said lower chamber (5);
- at least one inlet passage (6) communicating with said upper chamber (4) and connected to the corresponding delivery passage (6a) of a heating unit (T) for heating said fluid (F);
- at least one outlet passage (7) communicating with said lower chamber (5) and connected to the corresponding return passage (7a) of said heating unit (T);
- one or more delivery passages (8) positioned at different heights in said container (2), each one of which conveys said fluid (F) to a corresponding inlet passage (8a) of external heat exchange means (S);
- one or more return passages (9) positioned at different heights along said container (2) and connected to one or more outlet passages (9a) of said external heat exchange means (S);
- at least one first heat exchanger (21) with a coil (22) arranged inside said container (2) in contact with said fluid (F), provided with an inlet passage (21a) and an outlet passage (21b) arranged on the cover of said container (2) for the circulation of a first auxiliary fluid (Fa), which receives heat from said fluid (F) contained in said container (2),
**characterized in that** said coil (22) is wound to form a first helix (23) and at least one second helix (24) arranged inside said first helix (23).

2. Reservoir (20; 50; 60) according to claim 1), **characterized in that** said first heat exchanger (21) is contained in said upper chamber (4).

3. Reservoir according to any of the claims 1) or 2), **characterized in that** said coil is constituted by at least four rigid metal pipes arranged side by side.

4. Reservoir (20; 50; 60) according to any of the claims 1) or 2), **characterized in that** said coil (22) is constituted by at least one flexible metal pipe.

5. Reservoir (20; 50; 60) according to claim 4), **characterized in that** said coil (22) is constituted by at least two flexible metal pipes arranged side by side.

6. Reservoir (50; 60) according to any of the preceding claims, **characterized in that** it comprises at least one second heat exchanger (31; 32) arranged inside said container (2) and in contact with said fluid (F), in which it is possible to identify an inlet passage (31a; 32a) and an outlet passage (31b; 32b) for the circulation of a second auxiliary fluid (Fb, Fc), which transfers heat to said fluid (F) contained in said container (2).

7. Reservoir (60) according to claim 6), **characterized in that** it comprises one pair of second heat exchangers (31, 32), each one arranged inside one of said chambers (4, 5).

8. Reservoir (60) according to claim 7), **characterized in that** said second heat exchangers (31, 32) are connected in series.

9. Reservoir (50; 60) according to any of the claims from 6) to 8), **characterized in that** each one of said second heat exchangers (31, 32) is constituted by one rigid metal pipe (33, 34) wound in a coil.

10. Reservoir (20; 50; 60) according to any of the preceding claims, **characterized in that** it comprises also anti-turbulence means (10) immersed in said fluid (F), comprising:
- a manifold chamber (13) associated with the inner wall of said container (2) at least at the level of each one of said delivery passages (8);
- a manifold body (14) provided with through holes for the passage of said fluid (F) and connected to said at least one inlet passage (9) of said container (2) through at least one connection pipe (15).

11. Reservoir (20; 50; 60) according to claim 10), **characterized in that** each one of said manifold chambers (13) is constituted by a box-shaped container applied to said inner wall of said container (2) and is provided with at least one opening communicating with the inside of said container (2).

12. Reservoir (20; 50; 60) according to claim 11), **characterized in that** said opening is adjacent to said inner wall of said container (2) and is arranged according to a substantially vertical plane.

13. Reservoir (20; 50; 60) according to any of the claims from 10) to 12), **characterized in that** said manifold body (14) is a hollow cylindrical body provided with through holes.

14. Reservoir (20; 50; 60) according to any of the preceding claims, **characterized in that** it comprises probes (16) for measuring the temperature of said fluid (F).

15. Reservoir (20; 50; 60) according to any of the preceding claims, **characterized in that** it comprises a flange (17) applied to the outside of said container (2) and suited to house a submersible electric heater.
